# EUROPÄISCHE PATENTSCHRIFT

(11) **EP 0 847 607 B1**
(45) Veröffentlichungstag und Bekanntmachung des Hinweises auf die Patenterteilung: **22.12.1999**
(21) Anmeldenummer: 96934389.6
(22) Anmeldetag: 29.08.1996
(51) Int. Cl.: H01S 3/06, H01S 3/13

(54) **EINRICHTUNG MIT OPTISCHEM FASERVERSTÄRKER**
DEVICE WITH OPTICAL FIBRE AMPLIFIER
DISPOSITIF A AMPLIFICATEUR A FIBRES OPTIQUES

(30) Priorität: 02.09.1995 DE 19532485
(43) Veröffentlichungstag der Anmeldung: 17.06.1998
(73) Patentinhaber: ROBERT BOSCH GMBH, 70442 Stuttgart (DE)
(72) Erfinder: KOHN, Ulrich, D-71522 Backnang (DE)
(86) Internationale Anmeldenummer: DE9601594
(87) Internationale Veröffentlichungsnummer: WO9709757

(56) Entgegenhaltungen:
- IEEE PHOTONICS TECHNOLOGY LETTERS, MAY 1991, USA, Bd. 3, Nr. 5, ISSN 1041-1135, Seiten 453-455, XP000227397 DESURVIRE E ET AL: "Dynamic gain compensation in saturated erbium-doped fiber amplifiers"

## Beschreibung

### Stand der Technik

Die Erfindung geht aus von der Gattung, wie im unabhängigen Anspruch 1 angegeben. Zumindest bei erbiumdotierten Faserverstärkern in Mehrkanalsystemen kann die Abhängigkeit der Verstärkung von der Leistung der optischen Eingangssignale dazu führen, daß Änderungen der Leistung des optischen Eingangssignals eines Kanals die Verstärkung des Faserverstärkers bezüglich der optischen Signale eines anderen Kanals beeinflussen. Eine Verstärkungsstabilisierung ermöglicht eine einfachere Anpassung eines Faserverstärkers an unterschiedliche Gegebenheiten.

In ELECTRONIC LETTERS, Vol. 30, No. 12, Seiten 962 bis 963 ist eine Methode zur Stabilisierung der Verstärkung angegeben, bei der durch einen Resonator, der eine bestimmte Wellenlänge bevorzugt, die verstärkung festgelegt wird. Dort sind auch andere Methoden erwähnt, die sich mit dynamischer oder automatischer Verstärkungsregelung befassen.

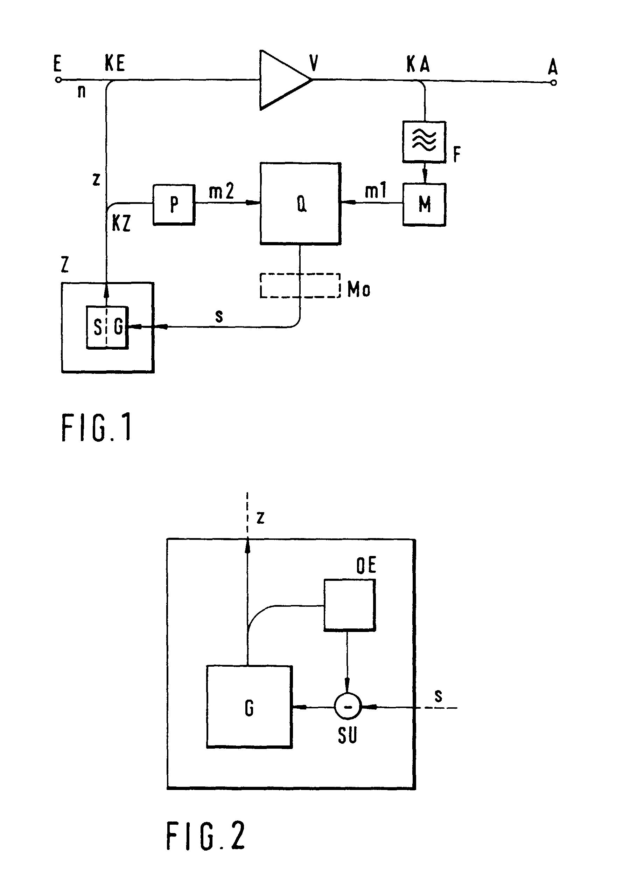

Aus IEEE Photonics Technology Letters, Band 3, Nummer 5, Mai 1991, Seiten 453 - 455 und Figur 1 ist eine Einrichtung bekannt, die einen optischen Faserverstärker und einen Regelkreis zur Stabilisierung der Verstärkung aufweist, wobei dem Eingang des Faserverstärkers innerhalb seiner Verstärkungsbandbreite ein optisches Zusatzsignal (1,54 µm) zugeführt wird, dessen Pegel von einem Steuerglied (feedback loop) gesteuert ist, dem ein die verstärkte spontane Emission (1,557 µm) repräsentierendes Meßsignal zugeführt wird.

### Vorteile der Erfindung

Der Anmeldungsgegenstand mit den Merkmalen des Anspruches 1 hat folgenden Vorteil: Er offenbart einen alternativen Regelkreis mit daran angepaßten Meßsignalen und ermöglicht auf einfache Weise, die Verstärkung ungefähr konstant zu halten. Die Verstärkung kann in gewissen Grenzen variiert werden; damit läßt sich der Faserverstärker leichter an unterschiedliche Systemforderungen anpassen.

### Zeichnung

Ein Ausführungsbeispiel der Erfindung ist in der Zeichnung dargestellt und in der nachfolgenden Beschreibung näher erläutert. Es ist gezeigt in
Figur 1: entsprechend der Erfindung ein optischer Faserverstärker mit einer Zusatzeinrichtung in einem Regelkreis zur Regelung der Verstärkung;
Figur 2: eine Ausgestaltungsmöglichkeit der

### Beschreibung des Ausführungsbeispiels

In den Figuren bedeuten:
- E:: Eingang der Einrichtung mit Regelkreis;
- A:: Ausgang der Einrichtung mit Regelkreis;
- V:: Faserverstärker, der über Lichtwellenleiter mit dem Eingang E bzw. dem Ausgang A verbunden ist;
- n:: optisches Nutzsinal am Eingang E;
- z:: optisches Zusatzsignal, das zusätzlich zu dem Nutzsignal n in den eingangsseitigen Lichtwellenleiter eingekoppelt wird;
- Z:: Zusatzeinrichtung, die das Zusatzsignal abgibt;
- S:: Steuereinrichtung;
- s:: Steuersignal;
- G:: Generator (Lichtsender, z. B. Laser);
- P:: Pegelmesser für die Leistung des Zusatzsignals;
- M:: Meßeinrichtung für die Leistung eines optischen Signals;
- m1, m2 :: Meßsignale;
- Q:: Steuerglied, in welchem der Quotient ml/m2 gebildet wird;
- F:: optisches Filter;
- Mo :: fakultativ einsetzbarer, elektrischer Modulator;
- OE:: Optoelektrischer Wandler;
- SU:: Subtraktionsglied.

Einzelheiten, die für den Fachmann selbstverständlich sind, sind fortgelassen. Beispielsweise sind Isolatoren im Zuge von Lichtwellenleitern der Übersichtlichkeit wegen weggelassen. Auch ist nicht gezeigt, wie die Führungsgröße den Regelkreisen zugeführt wird.

Funktion des bevorzugten Ausführungsbeispiels:

Bei der bevorzugten Einrichtung nach Figur 1 liegen am Eingang E optische Nutzsignale n, die auf einem Lichtwellenleiter dem Eingang eines optischen Faserverstärkers V zugeleitet werden. Von dessen Ausgang ist ein Lichtwellenleiter zum Ausgang A der Einrichtung geführt. Ein Teil des optischen Ausgangssignales des Faserverstärkers V wird mit Hilfe eines üblichen optischen Kopplers KA ausgekoppelt und gelangt zu einem optischen Filter F, dessen Durchlaßbereich dem Frequenz- und damit auch Wellenlängenbereich eines optischen Zusatzsignales z entspricht, das über einen üblichen Koppler KE den Nutzsignalen n überlagert wird. Bevorzugt weist das Zusatzsignal nur eine Wellenlänge auf, und das Filter selektiert dementsprechend möglichst schmalbandig.

Das Zusatzsignal kommt aus einer Zusatzeinrichtung Z, die einen Generator G für das optische Zusatzsignal z, beispielsweise einen Laser oder eine Laserdiode enthält. Außerdem ist in der Zusatzeinrichtung Z noch eine Steuereinrichtung S vorgesehen, die durch ein Steuersignal s eine Steuerung der Amplitude oder Intensität des vom Generator G erzeugten Zusatzsignales z ermöglicht.

Ein Teil des Zusatzsignals z wird mittels eines Kopplers KZ ausgekoppelt und einem Pegelmesser P zugeführt. Dessen Ausgangssignal wird als Meßsignal m2 bezeichnet und ist ein Maß für die Leistung des Zusatzsignals Z.

Dem optischen Filter F folgt eine Meßeinrichtung für die Leistung des optischen Signales, welches das Filter F verläßt. Dementsprechend ist das Meßsignal m1, das die Meßeinrichtung M abgibt, ein Maß für die Leistung derjenigen optischen Signale, die den Faserverstärker V verlassen, soweit sie die Wellenlänge des Zusatzsignales aufweisen. Die Meßsignale m1 und m2, die ein Maß für die Leistung des verstärkten bzw. des noch nicht verstärkten Zusatzsignals z sind, werden einem Steuerglied Q zugeführt, welches den Quotienten aus ml und m2 bildet, der ein Maß für die Verstärkung des Faserverstärkers V ist. Die Quotientenbildung kann bevorzugt dadurch erfolgen, daß in dem Steuerglied die elektrischen Meßsignale m1 und m2 zunächst jeweils analog/digital-gewandelt und dann digital in einem Prozessor verarbeitet werden werden. Das Ergebnis ist dann das Steuersignal s, welches über die Zusatzeinrichtung Z die Amplitude oder Intensität des Zusatzsignals z steuert.

Durch den beschriebenen Regelkreis wird erreicht, daß unabhängig von der Leistung des Nutzsignales n stets ein so starkes Zusatzsignal z zusätzlich dem Eingang des Faserverstärkers V zugeführt wird, daß dessen Verstärkung, die durch das Steuersignal s abgebildet ist, weitgehend konstant bleibt.

In Figur 2 ist eine Möglichkeit der Ausbildung der Zusatzeinrichtung Z angedeutet. Der Generator G gibt das Zusatzsignal z direkt an den Ausgang der Zusatzeinrichtung Z. Das Steuersignal s aus Figur 1 gelangt als Führungsgröße zu einem Regelkreis für den Generator G. Dieser Regelkreis enthält einen optoelektrischen Wandler OE, z. B. eine Monitordiode, dessen Ausgangssignal einem Subtraktionsglied SU zugeführt wird, dessen Ausgangssignal wiederum die Intensität bzw. Amplitude des Zusatzsignales z durch direkte Einwirkung auf den Generator G steuert. Je nachdem, ob das Subtraktionsglied SU analog oder digital arbeitet, muß in der einen oder anderen seiner Zuleitungen noch ein A/D- oder D/A-Wandler vorgesehen sein.

Durch den in Figur 1 dargestelltewn Regelkreis wird erreicht, daß die Verstärkung des Zusatzsignals z durch den Faserverstärker V weitgehend konstant gehalten wird, unabhängig davon, welche Leistung (innerhalb gewisser Grenzen) die Nutzsignale einzelner Kanäle oder insgesamt haben. Bevorzugt wird der Faserverstärker mit einem bestimmten Sättigungsgrad betrieben, so daß durch die Regelung erreicht wird, daß dieser Sättigungsgrad erhalten bleibt, auch wenn z. B. das Nutzsignal eines Kanals innerhalb des Mehrkanalsystems am Eingang E abgeschaltet wird.

In Figur 1 ist noch eine Abwandlungsmöglichkeit eingezeichnet. Durch einen Modulator Mo ist es möglich, das Zusatzsignal z, das hier als Träger dient, mit Nachrichtensignalen eines Zusatzkanals zu modulieren, beispielsweise mit Servicedaten oder Steuerungssignalen. Die optische Frequenz des Nutzsignales wird bevorzugt an den Rand der Verstärkungsbandbreite des Faserverstärkers V gelegt. Als optischer Faserverstärker wird bevorzugt ein Verstärker mit einer erbiumdotierten Verstärkungsfaser gewählt.

## Patentansprüche

1. Einrichtung mit optischem Faserverstärker, dessen Verstärkung von der Leistung seiner optischen Eingangssignale abhängt, mit einem Regelkreis zur Stabilisierung der Verstärkung, der folgenden Aufbau hat:
dem Eingang des Faserverstärkers (V) ist innerhalb seiner optischen Verstärkungsbandbreite ein optisches Zusatzsignal (z) zugeführt, dessen Pegel von einem Steuersignal (s) gesteuert ist, das von einem Steuerglied (Q) abgegeben wird, wobei dem erstem Eingang des Steuergliedes (Q) ein erstes Meßsignal (ml) zugeführt ist, das die Leistung des vom Faserverstärker (V) verstärkten optischen Zusatzsignales repräsentiert, während am zweitem Eingang des Steuergliedes (Q) ein zweites Meßsignal (m2) liegt, das die Leistung des noch nicht verstärkten optischen Zusatzsignals (z) repräsentiert, und wobei das Steuerglied (Q) den Quotienten aus beiden Meßsignalen (ml, m2) bildet, der ein Maß für die Verstärkung des Faserverstärkers (V) ist, die durch das Steuersignal (s) abgebildet ist.

2. Einrichtung nach Anspruch 1, dadurch gekennzeichnet, daß die optische Frequenz des Zusatzsignals (z) zwischen der optischen Frequenz oder den optischen Frequenzen von zu verstärkenden Nutzsignalen (n) und einer der beiden Grenzfrequenzen der Verstärkungsbandbreite liegt.

3. Einrichtung nach einem der vorherigen Ansprüche, dadurch gekennzeichnet, daß zwischen den Ausgang des Faserverstärkers (V) und eine Meßeinrichtung (M), die das erste Meßsignal (m2) abgibt, ein optisches Filter (F) zum Ausfiltern des verstärkten Zusatzsignals geschaltet ist.

4. Einrichtung nach einem der vorherigen Ansprüche, dadurch gekennzeichnet, daß das Zusatzsignal (z) als Träger von Nachrichtensignalen eines Zusatzkanals dient.

5. Einrichtung nach einem der vorherigen Ansprüche, dadurch gekennzeichnet, daß der Faserverstärker (V) eine erbiumdotierte Verstärkungsfaser aufweist.

## Claims

1. Device having an optical fibre amplifier whose gain depends on the power of its optical input signals, having a control loop, for stabilizing the gain, which has the following construction:
the input of the fibre amplifier (V) is fed, within its optical gain bandwidth, with an additional optical signal (z) whose level is controlled by a control signal (s) which is output by a control element (Q), the first input of the control element (Q) being fed with a first measurement signal (m1) which represents the power of the additional optical signal amplified by the fibre amplifier (V), while there is at the second input of the control element (Q) a second measurement signal (m2) which represents the power of the not yet amplified additional optical signal (z), and the control element (Q) forming the quotient of the two measurement signals (m1, m2), which is a measure of the gain of the fibre amplifier (V), the said gain being depicted by the control signal (s).

2. The device according to Claim 1, characterized in that the optical frequency of the additional signal (z) lies between the optical frequency or the optical frequencies of useful signals (n) to be amplified and one of the two limiting frequencies of the gain bandwidth.

3. Device according to one of the preceding claims, characterized in that an optical filter (F) for filtering out the amplified additional signal is connected between the output of the fibre amplifier (V) and a measuring device (M), which outputs the first measurement signal (m2).

4. Device according to one of the preceding claims, characterized in that the additional signal (z) serves as a carrier for telecommunications signals of an additional channel.

5. Device according to one of the preceding claims, characterized in that the fibre amplifier (V) has an erbium-doped amplifying fibre.

## Revendications

1. Installation à amplificateur à fibres optiques dont l'amplification dépend de la puissance des signaux optiques d'entrée, comprenant un circuit de régulation pour stabiliser l'amplification et ayant la structure suivante :
- l'entrée de l'amplificateur à fibres optiques (V) reçoit, dans sa largeur de bande d'amplification optique, un signal optique complémentaire (z) dont le niveau est commandé par un signal de commande (s) fourni par un organe de commande (Q),
- la première entrée de l'organe de commande (Q) recevant un premier signal de mesure (ml) qui représente la puissance du signal complémentaire optique amplifié par l'amplificateur à fibres optiques (V),
- la seconde entrée de l'organe de commande (Q) reçoit un second signal de mesure (m2) représentant la puissance du signal optique complémentaire (z) non encore amplifié, et
- l'organe de commande (Q) forme le rapport entre les deux signaux de mesure (ml, m2) qui est une mesure de l'amplification de l'amplificateur à fibres optiques (V), représentée par le signal de commande (s).

2. Installation selon la revendication 1,
caractérisée en ce que
la fréquence optique du signal complémentaire (z) se situe entre la fréquence optique ou les fréquences optiques de signaux utiles (n) à amplifier, et de l'une des deux fréquences limites de la largeur de bande d'amplification.

3. Installation selon l'une des revendications précédentes,
caractérisée par
un filtre optique (F) pour filtrer les signaux utiles amplifiés, ce filtre étant monté entre la sortie de l'amplificateur à fibres (V) et une installation de mesure (M) fournissant un premier signal de mesure (ml).

4. Installation selon l'une des revendications précédentes,
caractérisée en ce que
le signal complémentaire (z) constitue la porteuse des signaux d'information d'un canal complémentaire.

5. Installation selon l'une des revendications précédentes,
caractérisée en ce que
l'amplificateur à fibres optiques (V) est une fibre amplificatrice à dopage par de l'erbium.
